# EUROPEAN PATENT SPECIFICATION

(11) **EP 1 925 817 B1**
(45) Date of publication and mention of the grant of the patent: **31.10.2012**
(21) Application number: 07386026.4
(22) Date of filing: 20.11.2007
(51) Int. Cl.: F03B 13/06, F03D 9/00, F03D 9/02, H02J 3/38

(54) **A system of production of electric energy from renewable energy sources**
System zur Erzeugung elektrischer Energie aus erneuerbaren Energiequellen
Système pour la production d'énergie électrique à partir de sources d'énergies renouvelables

(30) Priority: 21.11.2006 GR 20060100633
(43) Date of publication of application: 28.05.2008
(73) Proprietor: Gamanis, George A., 55236 Panorama, Thessaloniki (GR)
(72) Inventor: Gamanis, George A., 55236 Panorama, Thessaloniki (GR)

(56) References cited:
- EP-A2- 1 813 807
- WO-A2-02/50618
- DE-A1- 3 640 470
- DE-A1- 4 301 659
- FR-A- 992 902
- US-A- 4 243 892
- US-A- 4 481 455
- US-A1- 2005 225 090

## Description

**FIELD OF THE INVENTION** This invention relates to a system of production and management of electrical energy from renewable energy sources, particularly from the synergetic exploitation of wind and/or solar energy through pumped storage hydroelectricity within a manmade water system, with the use of power electronics.

### BACKGROUND OF THE INVENTION

### Definitions of terms:

*Pumped storage.-* The conversion of electrical energy to potential energy by means of pumping water from a low level to a higher level of a manmade water system and, at a later time, the conversion of stored potential energy to hydraulic energy and then to electrical energy. *Pumped storage* is realized within a hydroelectric pumped storage power station.
*Manmade water system.-* The system of surface waters which is created by human activity.
*Basin of a surface channel.-* The area drained by a surface channel, natural or manmade, through successive tributaries.
*Grid*.- The electrical energy transmission and distribution system.
*Non-connected islands.-* The islands whose grid is not connected to the grid of the mainland.
*Power electronics.-* Systems of electronic devices for the management of electric power systems.
*Synergy.-* The favorable behavior of a system as a whole, produced as a result of combined action or cooperation of subsystems which are included in the system.

The concept of pumped storage has been well known since the end of the nineteenth century. In the 1890s, the first pumped storage applications were realized in Italy and in Switzerland.

The operation principle and the potential of the reversible pump-turbine, which operates as an electric powered pump or as a hydroelectric turbine, became well known when in the 1930s the first two hydroelectric pumped storage power plants were placed in operation in Europe, which stored electrical energy from thermal power stations during periods of low demand to meet peak load demands.

Also, a process for the exploitation of wind or solar energy using the concept of pumped storage and an installation for the application of the same process are well known from the Belgian patent no. BE 895698.

In installations of this type for the exploitation of wind or solar energy with the use of pumped storage, the conversion of wind energy to electrical energy is carried out with the use of wind turbines, and the conversion of solar energy to electrical energy is carried out with the use photovoltaic cells.

Installations of this type for the exploitation of wind or solar energy with the use of pumped storage are well known yet they have the following disadvantages:
- They are of low efficiency because they are based on the non-combined exploitation of wind energy, solar energy and stored energy from pumped storage.
- The electrical energy supplied by the wind turbines of the installations of this type is intermittent, fluctuating and not of high quality, in comparison with e.g. the electrical energy which is produced by thermal power plants. With reference to the electrical energy which is supplied by the photovoltaic cells of the installations of this type, it is also intermittent, but it has fluctuations at a lower degree in comparison with the fluctuations of the electrical energy of wind turbines.
- Wind turbines, which usually have asynchronous generators, require reactive power for their operation which is supplied by the grid.
- In case of steep fall of wind velocity there is also a steep fall of electrical power which is supplied to the grid and in combination with the steep fall in demand of reactive power, instabilities are created in the grid, especially in the grid of the non-connected islands.
- For the above reasons, the grid operators impose restrictions in the electrical power which is supplied by wind farms, which have sets of wind turbines. As a consequence, subsets of the sets of wind turbines are out of operation.
- Due to the low quality of electricity supplied by wind turbines and by photovoltaic cells, it is difficult to run electric driven pumps, of power e.g. of the order of 10 MWe, with such energy.

Due to the above-mentioned disadvantages, it was not possible to develop installations of this type, nor were financial resources provided for the research and development of reversible pump-turbines for use in small hydroelectric pumped storage power plants which store electrical energy which is provided by wind and/or solar energy, aiming at the more efficient exploitation of wind and/or solar energy.

### Definitions of technical phrases:

*AC variable speed drive.-* A power electronics device that controls the speed and the torque of an alternating current (AC) electric motor. By controlling the speed and the torque of the shaft of the AC electric motor, this power electronics device controls the flow of energy from the supply of electrical energy to the AC electric motor, and, as a consequence, from the supply of electrical energy to pumped storage.

*Direct torque control system* or *direct self-control of the flux and the rotary moment of a rotary-field machine.-* A method and device in which the speed and the torque of the shaft of an alternating current (AC) electric motor are calculated directly from the magnetic field, without the use of a speed feedback device (e.g a tachometer). In this method, the controlling parameters are motor magnetizing flux and motor shaft torque. An AC variable speed drive which depends on a direct torque control system knows exactly and at any point of time what is happening in the AC electric motor and directly controls the flow of energy to pumped storage.

*Frequency converter.-* A power electronics device that converts alternating current (AC) of one voltage and one frequency to alternating current of another voltage and another frequency. Although it has voltage conversion capabilities, this power electronics device is characterized in that it converts alternating current of one frequency to alternating current of another frequency. A frequency converter comprises an alternating current / direct current (AC/DC) converter (rectifier) and a direct current / alternating current (DC/AC) converter (inverter), which are connected to each other with a DC bus (DC link). The AC/DC converter (rectifier) is fed with electrical energy of fluctuating frequency which originates from a first source of electrical energy and the DC/AC converter (inverter) supplies electrical energy of constant frequency (e.g. 50 Hz). If a second source of electrical energy is connected to the DC bus (DC link), through one additional AC/DC converter (rectifier) or directly (a DC source), then we have: a double-fed frequency converter or a frequency converter which is independently fed with two independent sources of electrical energy. If a third source of electrical energy is connected to the DC bus (DC link), in the same way with which the above-mentioned second source of electrical energy has been connected to the DC bus, then we have: a triple-fed frequency converter or a frequency converter which is independently fed with three independent sources of electrical energy.

Document US 2005/225090 A1 discloses a configuration according to which each wind turbine generator device of a wind park is operationally connected to an AC/DC converter, the AC/DC converters are connected in parallel to a common DC link, and the common DC link is terminated by a DC/AC converter. If another primary energy producer that uses a generative energy source is included in the configuration, then this primary energy producer is also connected to the common DC link. In order to compensate for fluctuations in the available power from the primary energy producers that use regenerative energy sources, interim storage units that can store electrical energy and release it quickly when needed are also connected to the common DC link via appropriate charge/discharge circuitry. Such storage units can be electrochemical storage devices such as rechargeable batteries, but also capacitors or chemical storage units such as hydrogen accumulators, in which hydrogen produced by electrolysis from the excess electrical energy is stored. In times when only part of the electric power from the primary energy producers is required by the grid, it is also possible to operate a pumped storage plant, by means of which water is brought from a lower potential to a higher potential, so that the electric power from the pumped storage plant can be used if needed.

Document DE 4301659 A1 discloses an energy-storage for the exploitation of wind or solar energy, wherein the wind or solar energy is used for operating an electric motor driven pump for carrying fluid medium from a reservoir with a low fluid medium level to a reservoir with a high fluid medium level. The fluid medium flow which originates from the reservoir with the high fluid medium level operates a turbine generator device subsequently supplying electric power which can serve arbitrary consumers. According to document DE 4301659 A1, the turbine and the pump on the one hand as well as the electric motor and the generator on the other hand, are in communication in a suitable manner with a first controlling device, which comprises on the one hand electronic control and regulation-technical components and on the other hand electrical components, for supplying the required electric power-by the wind turbine generator devices and/or the photovoltaic cell devices-for operating the electric motor driven pump, and for supplying the electric power which can serve the arbitrary consumers. Also, for the selective change over/activation of the supplied electrical energy from the wind turbine generator device and/or from the photovoltaic cell device, for operating the electric motor driven pump, a second switching and controlling device is provided, which is in communication with the first controlling device with respect to change over/activation.

Document US 4243892 discloses a configuration of a fluid medium pumping system, for pumping a fluid medium from a lower level to a higher level, or from a fluid medium source at a lower level to a reservoir at a higher level. According to this configuration a flow path of a fluid from a fluid medium source is divided into at least two flow paths or lines, and then the at least two flow paths or lines are merged into a single flow path or line for conveying the fluid medium to the reservoir at the higher level. In one of the at least two flow paths or lines an electric motor driven pump is installed, and in each of the remaining flow paths or lines a reversible pump-turbine is installed. At high fluid flows all pumps or turbines act as electric motor driven pumps. At low fluid flows the regular-acting electric motor driven pump operates at an energy-efficient speed while the excess flowing fluid is caused to flow in a return fashion through the outer pump-turbines such that they act as turbine generator devices, thus forming at least one flow circuit or loop. The motors of the pumps, and the motors of the pump-turbines when they operate in a pump mode, are fed via variable speed drives.

Document WO 02/50618 A2 discloses a power controller which has a feed for electrical energy which originates from an energy source and an additional feed for electrical energy which originates from an energy storage, the power controller supplying output power for a utility/load. The energy source may be a turbo generator, wind turbine or any other conventional or newly developed source. The energy storage which comprises one or more capacitors is connected to the DC bus of the power controller through a bidirectional power converter to source instantaneous power to and sink instantaneous power from the DC bus in order to stabilize the DC voltage on the DC bus.

### BRIEF DESCRIPTION OF THE INVENTION

The essence of this inventions a system of production and management of electrical energy from renewable as laid out in claim 1 energy sources, which comprises a set of wind farms, a set of photovoltaic power stations which include arrays of photovoltaic cells, stored energy from pumped storage within a manmade water system, and a hydroelectric pumped storage power station which has electric motor driven pumps, which have electric motors and pumps, and hydroelectric turbines, which have turbines and generators, which is characterized in that:
- it has an AC variable speed drive system, of power equivalent to the power of electric motors, which has independent AC variable speed drive subsystems (drives) which transmit electric power to the above-mentioned electric motors of the above mentioned pumps, for the speed control of the electric motors and the realization of pumped storage,
- it has direct torque control systems of the above-mentioned motors,
- it has a frequency converter system, which consists of independent frequency converters which are automatically taken into use according to the available electrical power from the above-mentioned set of wind farms, the above-mentioned set of photovoltaic power stations and the above-mentioned stored energy from pumped storage,
- the above-mentioned hydroelectric turbines generate in synchronization with the grid frequency, but the above-mentioned electric motor driven pumps operate asynchronously (independently of the grid frequency),
- the flow of electrical energy which originates from the above-mentioned wind farms, the above-mentioned photovoltaic power stations, and the above-mentioned stored energy which originates from pumped storage of wind and/or solar energy, to the grid and/or to the above-mentioned electric driven pumps, is carried out through the above-mentioned frequency converter system,
- the electrical energy from the above-mentioned hydroelectric turbines is used to level the intermittent and fluctuating output of electrical energy from the above-mentioned set of wind farms and/or the above-mentioned set of photovoltaic power stations, through the above-mentioned frequency converter system.

According to the best mode contemplated for carrying out the present invention, the above mentioned hydroelectric pumped storage power station has reversible pump-turbines.

Some advantages of the present invention are that:
- it provides a high efficiency solution for the exploitation of wind and/or solar energy and assists in the decrease of dependency on fossil fuels,
- it assists in the more efficient management of electrical energy which originates from wind farms and/or photovoltaic power stations,
- the carrying out of pumped storage of electrical energy which originates from wind and/or solar energy is made easier,
- it levels the intermittent and fluctuating output of electrical energy which originates from wind farms and/or photovoltaic power stations,
- it guarantees the operation of wind farms, without restrictions by the grid operators,
- it can provide the wind farms with reactive power and it can guarantee the operation of wind turbines, independently from the grid,
- it can respond to sudden variations in demand for electrical power within a few seconds,
- it permits thermal power stations to operate at peak efficiency while reducing the need to cover for peaks in demand using electrical energy which is produced from expensive fossil fuels,
- the AC variable speed drive system results in a high starting torque of the electric motors of the pumps, i.e. nominal torque at zero speed, which as a result allows the soft start of the electric motor driven pumps, which means that, apart from other advantages, there is less mechanical stress on the machines, bearings and shafts and therefore an extension of their lifetime.
- the AC variable speed drive system permits the operation of electric motor driven pumps with variable supplied power from wind farms and solar power stations.
- the AC variable speed drive system permits the operation of electric motor driven pumps with less than their nominal supplied power, even with efficiency less than their optimum.
- the AC variable speed drive system assists in the reduction of energy losses during pumped storage of wind and solar energy.

### BRIEF DESCRIPTION OF THE DRAWINGS

The invention is described below with the aid of an example and with reference to the accompanying figures, in which:
Figure 1 shows a manmade pumped storage water system, which is part of the system of production and management of electrical energy according to the present invention.
Figure 2 shows a system of production and management of electrical energy according to the present invention as well as an *energy flow diagram* of the same system.

### DETAILED DESCRIPTION OF THE INVENTION

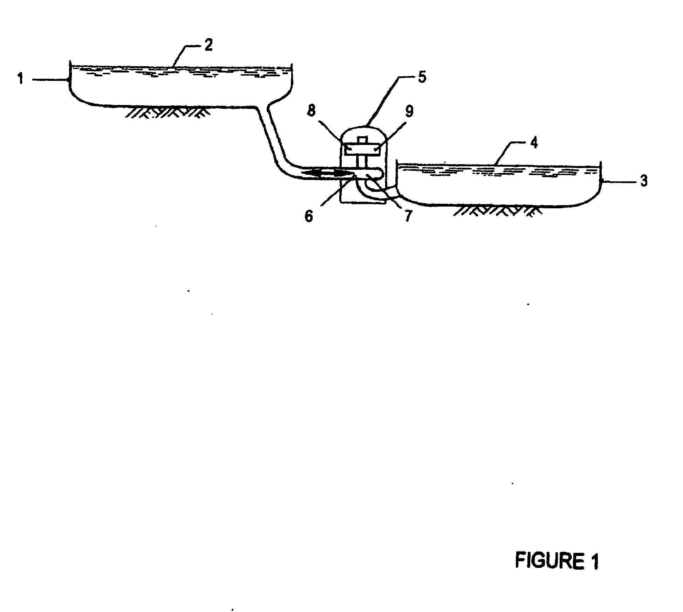

The water system of figure 1 has an upstream reservoir 1 with a high water level 2, a downstream reservoir 3 with a low water level 4, and a hydroelectric pumped storage power station 5.

Reservoirs 1 and 3 can be created by manmade barriers constructed on the bed of the same or on the beds of two neighboring surface channels. In the case of two neighboring surface channels, reservoirs 1 and 3 have different basins and their filling may be quicker.

Reservoir 1 can be created by excavation on the top of a hill and reservoir 3 can be created by a manmade barrier on the bed of a neighboring surface channel.

Reservoir 1 or 3 may be an existing reservoir which has been constructed for domestic or irrigation purposes, or both.

The hydroelectric pumped storage power station 5 of figure 1 has electric motors 8, pumps 6, turbines 7 and generators 9.

The hydroelectric pumped storage power station 5 of figure 1 preferably has reversible pump-turbines, in which electric motors 8 in reverse operation can operate as generators 9 and pumps 6 in reverse operation can operate as turbines 7.

The hydroelectric pumped storage power station 5 of figure 1 is preferably constructed underground in order to not affect the aesthetics of the landscape of the manmade water system.

During the selection of the most suitable area for the creation of a manmade water system of the type of figure 1, the topographical data of the area (e.g. topographic maps and drawings), the geology data of the area (e.g. type, structure and porosity of soils and rocks), and the climatological data of the extended area (e.g. monthly rainfall, mean wind velocity, sunshine duration and mean temperature), are taken into account. For example, from the study of Hellenic Army Geographical Service topographical maps of different areas in Greece and for each area, form the combined study of the corresponding geological maps of the Institute of Geology and Mineral Exploration, the climatological data of the Center for Renewable Energy Sources, and recent satellite pictures, it is easy to locate areas in Greece of which the geography and the climate are appropriate for the creation of manmade water systems of the type of figure 1.

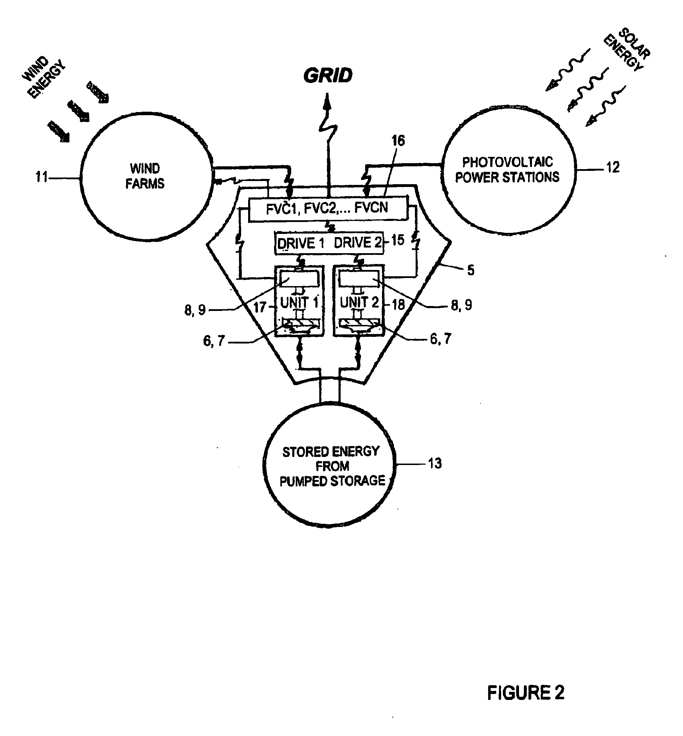

The system of production and management of electrical energy of figure 2 includes a set of wind farms 11, a set of photovoltaic power stations 12, stored energy 13 from pumped storage within a manmade water system according to figure 1, and a hydroelectric pumped storage power station 5 which has two units, UNIT 1 and UNIT 2, with reversible pump-turbines 17, 18, in which the electric motors 8 in reverse operation can operate as generators 9 and the pumps 6 in reverse operation can operate as turbines 7, and in which the transmission of electric power to the electric motors 8 of the pumps 6 is performed through an AC variable speed drive system 15, which has two independent AC variable speed drives DRIVE 1 and DRIVE 2.

The above-mentioned AC variable speed drive system 15, which is of power equivalent to the electric power of the electric motors 8, guarantees the accurate control of the speed of the electric motors 8 and the excellent dynamic performance of the electric driven pumps 8,6 during pumped storage.

In addition to the AC variable speed drive system 15, the two units, UNIT 1 and UNIT 2, with reversible pump-turbines 17, 18 of the hydroelectric pumped storage power station 5 of figure 2, have a system of direct torque control of the electric motors 8 for the specific torque control of the electric motors 8. This system, together with the above-mentioned AC variable speed drive system 15, controls the torque of electric motors 8 of pumps 6 at all speeds and provides a high starting torque of the electric motors 8 of the pumps 6 i.e. nominal torque at zero speed, which allows the soft start of the pumps 6 and as a consequence we have less mechanical stress on the machines, bearings and shafts and therefore an extension of their lifetimes.

The hydroelectric pumped storage power station 5 of figure 2 has a frequency converter system 16, which consists of independent frequency subconverters FVC1, FVC2, ... FVCN, which are automatically taken into use according to the available electrical power from the set of wind farms 11, the set of photovoltaic power stations 12 and the stored electrical energy 13 from pumped storage.

In other words, each of the above-mentioned independent subconverters FVC1, FVC2, ... FVCN is a triple-fed frequency converter, which is independently fed with three independent sources of electrical energy: with electrical energy which originates from the wind farms 11, with electrical energy which originates from the photovoltaic power stations 12 and with electrical energy which originates from the conversion of stored energy from pumped storage 13 to electrical energy. As will be illustrated hereinafter, this conversion is carried out by the reversible pump-turbine 17 or 18, when it operates as a hydroelectric turbine, or by the reversible pump-turbines 17 and 18, when they operate as hydroelectric turbines, within a manmade water system according to figure 1. In addition, each of the above-mentioned independent frequency subconverters FVC1, FVC2, ...FVCN is automatically taken into use according to the total electrical power with which the above-mentioned frequency converter system 16 is fed, and which total electrical power originates from the same above-mentioned three independent sources of electrical energy. In this way both the energy efficiency and the reliability of the frequency converter system 16 are improved. The hydroelectric pumped storage power station 5 can operate even when one or more subconverters cannot operate due to failure.

In the hydroelectric pumped storage power station 5 of figure 2, the generators 9 of the hydroelectric turbines 9,7 generate in synchronization with the grid frequency, but the electric motors 8 of the electric motor driven pumps 8, 6 operate asynchronously (independently of the grid frequency).

For the more efficient exploitation of solar energy, the photovoltaic power stations of figure 2 have arrays of photovoltaic cells fixed, in groups, on frameworks which perform translational and rotational movements, in such a way that the plane of the above-mentioned arrays of photovoltaic cells is continuously approximately perpendicular to the rays of the sun. The determination of the azimuthal and elevational angle of the sun is carried out with the aid of a software, based on an algorithm for the determination of the position of the sun as a function of the geographic latitude and longitude of the position of the photovoltaic power station, the date and the time.

According to the energy flow diagram of figure 2, the electrical energy which is produced by the wind farms 11 and/or the photovoltaic power stations 12 is transmitted to the frequency converter system 16. Next, part of it is supplied to the grid for consumption and part of it is transmitted to the electric motor 8 of pump 6 of the reversible pump-turbine 17 or 18, or to the electric motors 8 of pumps 6 of the reversible pump-turbines 17 and 18, through the AC variable speed drive system 15, for pumped storage.

The stored potential energy from pumped storage 13 is converted to hydraulic energy within the manmade water system and then it is converted to electrical energy in the reversible pump-turbine 17 or 18 and it is transmitted to the frequency converter system 16. Next, part of it is supplied to the grid for consumption, part of it is transmitted to the electric motor 8 of pump 6 of the other reversible pump-turbine 17 or 18 through the AC variable speed drive system 15 for pumped storage, and part of it is used for the supply of wind farms 11 with reactive power.

At times of high peak demand or at times of steep fall of wind velocity, both units 17 and 18, UNIT 1 and UNIT 2, of the hydroelectric pumped storage power station 5 of figure 2 are taken into use within a few seconds in order to satisfy demand.

The electrical energy from the reversible pump-turbines 17 or 18, or 17 and 18, of figure 2, when they operate as hydroelectric turbines, is used to level the intermittent and fluctuating electrical energy which originates from the wind farms 11 and from the photovoltaic power stations 12, through the frequency converter system 16.

In other words, the electrical energy which originates from generator 9 of the reversible pump-turbine 17 or 18, when the reversible pump-turbine 17 or 18 operates as a hydroelectric turbine, is used to level the intermittent and fluctuating electrical energy which originates from the wind farms 11 and from the photovoltaic power stations 12. The leveling is carried out through the frequency converter system 16.

In particular, given that according to the present invention the flow of electrical energy which originates from the wind farms 11, from the photovoltaic power stations 12 and from the generator 9 of the reversible pump-turbine 17 or 18 is carried out through the frequency converter system 16, the leveling is realized by controlling the flow of electrical energy which originates from the generator 9 of the reversible pump-turbine 17 or 18 to the frequency converter system 16.

In order to achieve this, the electrical energy which originates from generator 9 of the reversible pump-turbine 17 or 18 is distributed (e.g. through a distributor) and feeds each of the first feeds of the triple-fed frequency converters FVC1, FVC2, ... FVCN. The electrical energy which originates from the wind farms 11 is distributed in the same way and feeds each of the second feeds of the triple-fed frequency converters FVC1, FVC2, ...FVCN. Likewise, the electrical energy which originates from the photovoltaic power stations 12 is distributed and feeds each of the third feeds of the triple-fed frequency converters FVC1, FVC2, ... FVCN.

Since the wind farms 11 are located in different regions, which at any given time most probably have different wind velocities, and since the photovoltaic power stations are also located in different regions, which at any given time probably have different sunshine, the above feeding method of the frequency converters FVC1, FVC2,... FVCN with

electrical energy from renewable energy sources has as a result a first leveling, of the intermittent and fluctuating electrical energy which originates from the wind farms 11 and from the photovoltaic power stations 12, on the DC buses of the frequency converters FVC1, FVC2,... FVCN. Next, the full leveling of the intermittent and fluctuating electrical energy which originates from the wind farms 11 and from the photovoltaic power stations 12, is realized on the DC buses of the frequency converters FVC1, FVC2, ...FVCN by controlling the flow of electrical energy which originates from the generator 9 of the reversible pump-turbine 17 or 18 to the above-mentioned first feeds of the triple-fed frequency converters FVC1, FVC2, ...FVCN of the frequency converter system 16.

The above-mentioned full leveling of the intermittent and fluctuating electrical energy of the wind farms 11 and the photovoltaic power stations 12 is realized only by controlling the flow of electrical energy which originates from the generator 9 of the reversible pump-turbine 17 or 18 to the above-mentioned first feeds of the triple-fed frequency converters FVC 1, FVC2, ... FVCN of the frequency converter system 16, and without local control of the operation of one or multiple wind turbine generators which belong to the above mentioned set of wind farms 11, as well as without local control of the operation of one or multiple arrays of photovoltaic cells which belong to the above mentioned set of photovoltaic power stations 12. In this way the frequency converter system 16 of the hydroelectric pumped storage power station 5 can be supplied with the maximum electrical energy which can be produced by each wind farm 11, which may be an existing wind farm, and/or with the maximum electrical energy which can be produced by each photovoltaic power station, which may be an existing photovoltaic power station, without controlling the operation of each wind farm 11 and/or each photovoltaic power station 12.

This has as a prerequisite the fully controllable flow of electrical energy from the output of the frequency converter system 16 to the electric motors 8 of pumps 6, that is to pumped storage 13, which is realized with the use of the AC variable speed drive system 15 in combination with the direct torque control system , so that the system of production and management of electrical energy from renewable energy sources continues to operate smoothly in case of steep fall of the demand in power by the grid. Furthermore, in this way the need for dump loads which consume electrical energy is minimized and from this point of view the system of production and management of electrical energy from renewable energy sources according to the present invention assists in the saving of both equipment and energy.

With reference to the control of the flow of the electrical energy which originates from the generator 9 of the reversible pump-turbine 17 or 18 to the frequency converter system 16, this control is carried out by controlling the flow of water to the turbine 7. For example, if we have a small Francis reversible pump-turbine 17 or 18, which is a radial-axial flow machine, of power 20 MWe and of medium voltage, the control of the flow of electrical energy which is generated by generator 9 (when the reversible pump-turbine 17 or 18 operates as a hydroelectric turbine) to the frequency converter system 16 (also of medium voltage) is carried out by controlling the radial flow of water to the turbine 7 of the reversible pump-turbine 17 or 18 through the circumferential to the turbine 7 wicket gates.

As more wind farms 11 and/or more photovoltaic power stations 12 are connected to the frequency converter system 16 of the hydroelectric pumped storage power station 5, the electrical energy on the DC buses of the frequency subconverters FVC1, FVC2, ...FVCN which originates from the renewable energy sources has less fluctuation and, from the leveling point of view, the generator 9 of a relatively low power reversible pump-turbine 17 or 18 can level fluctuating electrical energy of renewable sources of relatively higher total power.

## Claims

1. A system of production and management of electrical energy from renewable energy sources, comprising:
- at least one wind farm (11) and/or at least one photovoltaic power station (12);
- stored energy from pumped storage (13) within a manmade water system;
- at least one hydroelectric pumped storage power station (5) within the same said manmade water system, said power station (5) comprising:
- at least one hydroelectric turbine (9, 7) which comprises at least one turbine (7) and at least one generator (9),
- at least one electric motor driven pump (8, 6) which comprises at least one electric motor (8) and at least one pump (6),
- at least one frequency converter system (16) which comprises independent frequency converters (FVC1, FVC2, ... FVCN),
- at least one AC variable speed drive system (15) which comprises independent AC variable speed drives (DRIVE 1, DRIVE 2, ... DRIVE N);
**characterized in that**:
- said at least one frequency converter system (16) comprises at least one frequency converter (FVC1) which has a first feed for electrical energy which originates from said at least one hydroelectric turbine (9, 7) and at least one additional feed for electrical energy which is being generated by: a) said at least one wind farm (11) and/or b) said at least one photovoltaic power station (12), said at least one frequency converter (FVC1) supplying output power for said at least one electric motor driven pump (8, 6) and/or for the grid;
- said at least one AC variable speed drive system (15) comprises at least one AC variable speed drive (DRIVE 2) transmitting electric power to said at least one electric motor driven pump (8, 6) when operated, said at least one electric motor driven pump (8, 6) feeding said stored energy from pumped storage (13) with potential energy;
- said at least one hydroelectric turbine (9, 7) is configured to generate electrical energy for said first feed for electrical energy of said at least one frequency converter (FVC1), wherein:
- the hydraulic energy with which said at least one hydroelectric turbine (9, 7) is fed originates from said stored energy from pumped storage (13),
- the electrical energy generated by said at least one hydroelectric turbine (9, 7) is distributed to said independent frequency converters (FVC1, FVC2, ... FVCN) feeding said first feed for electrical energy of said at least one frequency converter (FVC 1),
- the electrical energy generated by said at least one hydroelectric turbine (9, 7) is used for leveling the electrical energy which is being generated by: a) said at least one wind farm (11) and/or b) said at least one photovoltaic power station (12),
- said leveling is realized on the DC bus of said at least one frequency converter (FVC1) by controlling the flow of electrical energy from said at least one generator (9) to said first feed of said at least one frequency converter (FVC 1);
and
- said system of production and management of electrical energy further comprises a direct torque control system of said at least one electric motor driven pump (8, 6), wherein said direct torque control system in combination with said at least one AC variable speed drive (DRIVE 2) controls the energy flow to said stored energy from pumped storage (13).

2. A system of production and management of electrical energy according to claim 1,
**characterized in that**:
- said independent frequency converters (FVC1, FVC2, ... FVCN) are automatically taken into use according to the supplied electrical power from said at least one generator (9) and the available electric power from said at least one wind farm (11) and/or said at least one photovoltaic power station (12).

3. A system of production and management of electrical energy according to claim 1,
**characterized in that**:
- said at least one generator (9) generates in synchronization with the grid frequency; and
- said at least one electric motor (8) operates asynchronously, independently of the grid frequency.

4. A system of production and management of electrical energy according to claim 3,
**characterized in that**:
- said at least one generator (9) supplies reactive power for the realization of the operation of wind turbines of said at least one wind farm (11).

5. A system of production and management of electrical energy according to claim 1,
**characterized in that**:
- said at least one hydroelectric turbine (9, 7) comprises a reversible pump-turbine (17); and/or
- said at least one electric motor driven pump (8, 6) comprises a reversible pump-turbine (18).

## Patentansprüche

1. System zur Erzeugung und Management elektrischer Energie aus emeuerbaren Energiequellen, umfassend:
- mindestens ein Windkraftwerk (11) und/oder mindestens ein Photovoltaik-Kraftwerk (12);
- gespeicherte Energie aus Pumpenspeicherung (13) innerhalb eines menschengemachten Wassersystems;
- mindestens ein hydroelektrisches Pumpenspeicherungskraftwerk (5) innerhalb des gleichen genannten menschengemachten Wassersystems, genanntes Kraftwerk (5) umfassend:
- mindestens eine hydroelektrische Turbine (9, 7), welche mindestens eine Turbine (7) und mindestens einen Generator (9) umfasst,
- mindestens eine mit Elektromotor betriebene Pumpe (8, 6) welche mindestens einen Elektromotor (8) und mindestens eine Pumpe (6) umfasst,
- mindestens ein Frequenzumrichter-System (16) umfassend unabhängige Frequenzumrichter (FVC1, FVC2, ... FVCN),
- mindestens ein AC-drehzahlvariables Antriebssystem (15), welches unabhängige AC-drehzahlvariable Antriebe (DRIVE1, DRIVE2, ... DRIVE N) umfasst;
**dadurch gekennzeichnet, dass**:
- genanntes mindestens ein Frequenzumrichter-System (16) mindestens einen Frequenzumrichter (FVC1) umfasst, welcher eine Erstzuleitung für elektrische Energie hat, die aus der genannten mindestens einen hydroelektrischen Turbine (9, 7) stammt, und mindestens eine zusätzliche Zuleitung für elektrische Energie, welche erzeugt wird durch: a) genanntes mindestens ein Windkraftwerk (11) und/oder b) genanntes mindestens ein Photovoltaik-Kraftwerk (12), genannten mindestens einen Frequenzumrichter (FVC1), der zur genannte mindestens eine mit Elektromotor betriebene Pumpe (8, 6) und/oder für das Stromnetz Ausgangsstrom liefert;
- genanntes mindestens ein AC-drehzahlvariables Antriebssystem (15) mindestens einen AC-drehzahlvariablen Antrieb (DRIVE 2) umfassend, der elektrischen Strom zur genannten mindestens einen mit Elektromotor betriebenen Pumpe (8, 6)-wenn in Betrieb-überträgt, genannte mindestens mit einem Elektromotor betriebene Pumpe (8, 6), die genannte gespeicherte Energie aus der Pumpenspeicherung (13) mit potenzieller Energie einspeist;
- genannte mindestens eine hydroelektrische Turbine (9, 7) konfiguriert ist, um elektrischen Strom zu erzeugen für genannte Erstzuleitung für elektrischen Strom des genannten mindestens einen Frequenzumrichters (FVC1), wobei:
- die hydraulische Energie, mit welcher genannte mindestens eine hydroelektrische Turbine (9, 7) gespeist wird, von genannter gespeicherter Energie aus Pumpenspeicherung (13) stammt,
- die elektrische Energie erzeugt durch genannte mindestens eine hydroelektrische Turbine (9, 7) verteilt wird an genannte unabhängige Frequenzumrichter (FVC1, FVC2, .... FVCN), die genannte Erstzufuhr für elektrische Energie des genannten mindestens einen Frequenzumrichters (FVC1) speist,
- die elektrische Energie erzeugt durch genannte mindestens eine hydroelektrische Turbine (9, 7) verwendet wird zum Ausgleich der elektrischen Energie, welche erzeugt wird durch: a) genanntes mindestens ein Windkraftwerk (11) und/oder b) genanntes mindestens ein Photovoltaik-Kraftwerk (12),
- genannter Ausgleich wird realisiert auf dem DC-Bus des genannten mindestens einen Frequenzumrichters (FVC1) durch die Kontrolle des Flusses der elektrischen Energie vom genannten mindestens einen Generator (9) zur genannten Erstzufuhr des genannten mindestens einen Frequenzumrichters (FVC1);
und
- genanntes System zur Erzeugung und Management elektrischer Energie umfassend weiterhin ein System zur Drehmomentdirektregelung der genannten mindestens einen mit Elektromotor betriebenen Pumpe (8, 6), wobei genanntes direktes Drehmomentregelungssystem in Zusammenhang mit genanntem mindestens einen AC-drehzahlvariablen Antrieb (DRIVE 2) den Energiefluss zu genannter gespeicherten Energie aus der Pumpenspeicherung (13) kontrolliert.

2. System zur Erzeugung und Management von elektrischer Energie nach Anspruch 1,
**dadurch gekennzeichnet, dass**:
- genannte unabhängige Frequenzumrichter (FVC1, FVC2, ... FVCN) automatisch in Betrieb genommen werden entsprechend dem gelieferten elektrischen Strom von genanntem mindestens einem Generator (9) und dem verfügbaren elektrischen Strom von genanntem mindestens einem Windkraftwerk (11) und/oder genanntem mindestens einem Photovoltaik-Kraftwerk (12).

3. System zur Erzeugung und Management von elektrischer Energie nach Anspruch 1,
**dadurch gekennzeichnet, dass**:
- genannter mindestens ein Generator (9) in Synchronisation mit der Stromnetzfrequenz erzeugt; und
- genannter mindestens ein Elektromotor (8) asynchron funktioniert, unabhängig von der Stromnetzfrequenz.

4. System zur Erzeugung und Management von elektrischer Energie nach Anspruch 3,
**dadurch gekennzeichnet, dass**:
- genannter mindestens ein Generator (9) Blindleistung liefert zur Realisierung des Betriebs der Windturbinen des genannten mindestens einen Windkraftwerks (11).

5. System zur Erzeugung und Management von elektrischer Energie nach Anspruch 1,
**dadurch gekennzeichnet, dass**:
- genannte mindestens eine hydroelektrische Turbine (9, 7) eine reversible Pumpenturbine (17) umfasst; und/oder
- genannte mindestens eine mit Elektromotor betriebene Pumpe (8, 6) eine reversible Pumpenturbine (18) umfasst.

## Revendications

1. Système de production et de gestion d'énergie électrique à partir de sources d'énergie renouvelables, comprenant:
- au moins un parc éolien (11) et/ou au moins une centrale photovoltaïque (12);
- de l'énergie stockée à partir de pompage-turbinage (13) dans un système d' eau artificiel;
- au moins une centrale hydroélectrique de pompage-turbinage (5) dans le système artificiel sus-désigné (5), comprenant :
- au moins une turbine hydroélectrique (9, 7) qui comprend au moins une turbine (7) et au moins un générateur (9),
- au moins une pompe motorisée électrique (8, 6) qui comprend au moins un moteur électrique (8) et au moins une pompe (6),
- au moins un système de convertisseur de fréquence (16) qui comprend des convertisseurs de fréquence indépendants (FVC1, FVC2, ...FVCN),
- au moins un système d'entraînement de vitesse variable AC (15) qui comprend des entraînements de vitesse variable AC (DRIVE 1, DRIVE 2, ... DRIVE N);
**caractérisé en ce que**:
- au moins un système de convertisseur de fréquence sus-désigné (16) comprend au moins un convertisseur de fréquence (FVC1) qui a une première alimentation pour énergie électrique qui provient d'au moins une turbine hydroélectrique (9, 7) et au moins une alimentation additionnelle pour énergie électrique produite par: a) au moins un parc éolien sus-désigné (11) et/ou b) au moins une centrale photovoltaïque (12), au moins un convertisseur de fréquence sus-désigné (FVC1) fournissant puissance électrique pour au moins une pompe motorisée électrique sus-désigné (8, 6) et/ou pour le réseau de distribution;
- au moins un système d'entraînement de vitesse variable AC sus-désigné (15) comprend au moins un entraînement de vitesse variable AC (DRIVE 2) transmettant de la puissance électrique à, au moins, une pompe motorisée électrique (8, 6) quand mise en marche, au moins une pompe motorisée électrique sus-désignée (8, 6) alimentant l'énergie stockée sus-désignée à partir de pompage-turbinage (13) avec de l'énergiepotentielle;
- au moins une turbine hydroélectrique sus-désigné (9, 7) est conçue pour produire de l'énergie électrique pour ladite première alimentation pour énergie électrique d'au moins un convertisseur de fréquence (FVC1), dans lequel:
- l'énergie hydraulique avec laquelle au moins une turbine hydroélectrique sus-désigné (9, 7) est alimentée provient de 1' énergie stockée sus-désignée à partir de pompage-turbinage (13),
- l'énergie électrique produite par au moins une turbine hydroélectrique sus-désignée (9, 7) est distribuée auxdits convertisseurs de fréquence indépendants (FVC1, FVC2, ...FVCN) alimentant la première alimentation pour énergie électrique d'au moins un convertisseur de fréquence sus-désigné (FVC1),
- l'énergie électrique produite par au moins une turbine hydroélectrique sus-désigné (9, 7) est utilisée pour mettre à niveau l'énergie électrique produite par: a) au moins un parc éolien sus-désigné (11) et/ou b) au moins centrale photovoltaïque sus-désigné (12),
- la mise à niveau sus-désignée est effectuée sur la barre omnibus pour courant continu d'au moins un convertisseur de fréquence sus-désigné (FVC1) en contrôlant le flux d'énergie électrique à partir d'au moins un générateur sus-désigné (9) à la première alimentation d'au moins un convertisseur de fréquence sus-désignée (FVC1);
et
- le système de production et de gestion sus-désigné d'énergie électrique comprend, en plus, un système de contrôle de couple direct d'au moins une pompe motorisée électrique sus-désignée (9, 6), ou le système de contrôle de couple direct en combinaison avec au moins un entraînement de vitesse variable AC (DRIVE 2) contrôle le flux d'énergie à 1' énergie stockée à partir de pompage-turbinage sus-désigné (13).

2. Système de production et de gestion d'énergie électrique selon la revendication 1,
**caractérisé en ce que**:
- les convertisseurs de fréquence indépendants sus-désignés (FVC1, FVC2, ... FVCN) sont automatiquement employés selon la puissance électrique fournie à partir d'au moins un générateur sus-désigné (9) et la puissance électrique disponible à partir d'au moins un parc éolien sus-désigné (11) et/ou d'au moins une centrale photovoltaïque sus-désigné (12).

3. Système de production et de gestion d'énergie électrique selon la revendication 1,
**caractérisé en ce que**:
- au moins un générateur sus-désigné (9) produit en synchronisation avec la fréquence du système de distribution ; et
- au moins un moteur électrique sus-désigné (8) fonctionne de manière asynchrone, indépendamment de la fréquence de réseau.

4. Système de production et de gestion d'énergie électrique selon la revendication 3,
**caractérisé en ce que**:
- au moins un générateur (9) fournit de la puissance réactive pour le fonctionnement des éoliennes d'au moins un parc éolien sus-désigné (11).

5. Système de production et de gestion d'énergie électrique selon la revendication 1,
**caractérisé en ce que**:
- au moins une turbine hydroélectrique sus-désigné (9, 7) comprend une pompe- turbine réversible (17); et/ou
- au moins une pompe motorisée électrique sus-désignée (8, 6) comprend une pompe-turbine réversible (18).
